# EUROPÄISCHE PATENTSCHRIFT

(11) **EP 0 620 136 B1**
(45) Veröffentlichungstag und Bekanntmachung des Hinweises auf die Patenterteilung: **15.05.1996**
(21) Anmeldenummer: 94102605.6
(22) Anmeldetag: 22.02.1994
(51) Int. Cl.: B60P 1/56, B60P 3/22

(54) **Lastfahrzeug, insbesondere Sattelauflieger**
Load-carrying vehicle, particularly semi-trailer
Véhicule de transport de charges, notamment semi-remorque

(30) Priorität: 16.04.1993 DE 9305698 U
(43) Veröffentlichungstag der Anmeldung: 19.10.1994
(73) Patentinhaber: FELDBINDER & BECKMANN FAHRZEUGBAU oHG, D-21423 Winsen (DE)
(72) Erfinder: Beckmann, Jan-Dirk, D-21423 Winsen/Luhe (DE); Feldbinder, Otto, D-29643 Neuenkirchen (DE)
(74) Vertreter: Richter, Werdermann & Gerbaulet

(56) Entgegenhaltungen:
- EP-A- 0 262 261
- EP-A- 0 333 127
- DE-B- 1 148 187
- DE-U- 1 897 886
- FR-A- 1 488 181
- GB-A- 1 515 644

## Beschreibung

Die Erfindung betrifft ein Lastfahrzeug, nämlich einen Sattelauflieger, mit mindestens einem auf einem Fahrwerk auflagernden Ladungsbehälter zur Aufnahme druckbeaufschlagbarer Güter, der mindestens einen unteren Auslaß aufweist, wobei der untere Auslaß des Ladungsbehälters als Ein- und Auslaß gestaltet ist und mit Zu- und Ableitungsanschlüssen und mit Absperreinrichtungen versehen ist und das Lastfahrzeug eine Einrichtung zur Erzeugung von Unterdruck und Überdruck aufweist, die mit dem Innenraum des Ladungsbehälters verbunden als mit einer Antriebseinrichtung verbundener Kompressor und Evakuierer ausgebildet ist, wobei die Antriebseinrichtung als Elektromotor, Verbrennungsmotor, Hydraulik- oder Pneumatikantrieb od.dgl. ausgebildet ist und der untere Ein- und Auslaß nach Art der an sich bekannten Entladungseuter konus-, euter- oder trichterförmig ausgebildet ist.

Nach dem Stand der Technik sind beispielsweise zylindrische Vacuumbehälterfahrzeuge bekannt, mit denen meist verflüssigte Güter aufgenommen und am Bestimmungsort abkippbar sind, wozu das Kraftfahrzeug über eigene, meist hydraulisch angetriebene Hubwerk verfügt, die den kippbaren Behälter um bis zu etwa 45^{o} schwenken bzw. einseitig anheben. Die Kippung erfolgt nach hinten.

Bekannt sind auch sog. Sattelschlepper mit einer Zugmaschine und einem Sattelanhänger, dem sog. Sattelauflieger, der Spezialaufbauten besitzt, z.B. Silobehälter zur Aufnahme von flüssigem oder festem Schüttgut, die von oben befüllbar und über einen unteren Auslaß entleerbar sind. Diese Sattelschlepper haben gegenüber den starr ausgebildeten Lastkraftwagen den Vorteil, wendefähiger zu sein, darüber hinaus kann die Zugmaschine ggf. auch ausgetauscht bzw. für andere Sattelanhänger verwendet werden.

Im Hinblick auf die Be- und Entladung solcher Silosattelauflieger ist es bereits auch bekannt, diese als Kippsilosattelauflieger auszubilden. Dabei wird der Ladungsbehälter auf einem Fahrzeugrahmen mit einem Fahrwerk aufgelagert, und zwar verschwenkbar, wobei der Fahrzeugrahmen ein meist hydraulisch angetriebenes Hubwerk aufweist, mit dem der Ladungsbehälter um bis zu maximal 55^{o} Kippwinkel verschwenkbar ist.

Bei anderen bekannten Silosattelaufliegern ist vorgesehen, daß der Ladungsbehälter zylinderförmig ausgebildet ist und in seinem Innenraum einen beweglichen Kolben aufweist, mit dem das Ladegut über eine an der hinteren Stirnwand untenseitig angeflanschte Materialauslaufschüssel entleerbar ist (DE 41 31 677 A1).

Alle diese Systeme haben den Nachteil, daß sie recht aufwendig sind, daß sie teilweise sehr viel Platz benötigen, um den Be- und Entladungsvorgang durchzuführen und daß sie teilweise auch eine vollständige Beund Entladung nur schwer ermöglichen. Als gekippte Fahrzeuge stellen sie sogar eine Gefährdung der umgebenden Flächen und Personen dar.

Bei einem aus dem DE-U- 18 97 886 bekannten Transportfahrzeug für flüssiges bzw. pulverförmiges Gut ist ein Transportbehälter vorgesehen, bei dem mittels einer Pumpe eine Be- und Entladung sowohl von pulverförmigen als auch von flüssigem Ladegut erfolgen kann. Dabei ist vorgesehen, beim Übergang von der einen Gut-Art zu der anderen Gut-Art (flüssig/pulverförmig oder umgekehrt) das Behälterinnere durch Spülen zu säubern.

Aus der GB-A- 15 15 644, welche den nächstliegenden Stand der Technik gemäß den Merkmalen des Oberbegriffes des Anspruches 1 darstellt, ist ein Sattelauflieger bekannt, der einen Ladungsbehälter für flüssige Güter aufweist. An dem Ladungsbehälter ist der untere Ausfluß als ein Ein- und Auslaß gestaltet und mit Zu- und Ableitungsanschlüssen versehen. Außerdem ist ein Kompressor bzw. Exhauster am Chassis angeordnet, der mit dem Innenraum des Ladungsbehälters verbunden ist.

Bei einem Fahrzeug gemäß EP-A-0 333 127 kann zum Anbringen eines in den Tank greifenden Spül- oder Sprühkopfes ein Rohrstutzen vorgesehen werden. Eine integrierte Reinigungseinrichtung ist hierbei nicht vorgesehen.

Der Erfindung liegt daher die Aufgabe zugrunde, ein Lastfahrzeug der eingangs genannten Art zu schaffen, mit dem eine von Be- und Entladungseinrichtungen unabhängige Be- und Entladung des Lastfahrzeugs selbsttätig und einfach durchführbar ist, wobei ein Wechsel der Art des Ladegutes problemlos durchführbar sein soll.

Diese Aufgabe wird durch die in Anspruch 1 gekennzeichneten Merkmale gelöst.

Es ist dabei vorgesehen, daß der oder die unteren Auslässe, die üblicherweise als sog. Entladungseuter ausgebildet sind, nunmehr als Ein- und Auslaß gestaltet sind. Hierzu ist vorteilhafterweise vorgesehen, daß im Spitzen- bzw. Endbereich des zumeist konusförmigen Ein- und Auslasses ein Rohrstutzen angeflanscht ist, der eine Anschlußeinrichtung aufweist, mit der er an ein Zuleitungsrohr, einen Zuleitungsschlauch oder an einen Ladegutbehälter anschließbar ist. Der Rohrstutzen ist dabei vorteilhafterweise mit einer Absperreinrichtung in Form eines Schiebers od.dgl. versehen, wobei die Absperreinrichtung entweder manuell betätigbar ist oder mit einer Antriebseinrichtung gekoppelt ist, die fernsteuerbar ist, so daß eine vollautomatische Be- und Entleerung durchführbar ist. Es kann dabei vorgesehen werden, daß die Rohrstutzen einen gemeinsamen Anschluß aufweisen, jedoch kann es zu einer schnellen Be- und Entladung oder auch für den Transport unterschiedlicher Ladungsgüter vorteilhaft sein, jeden Ein- und Auslaß mit einem eigenständigen Rohr- oder sonstwie gearteten Anschlußstutzen zu versehen, um ein separates Be- und Entladen zu ermöglichen. Das Lastfahrzeug wird aus Gewichtsgründen zu selbsttragender Bauweise ausgeführt. Der Behälter besteht dabei aus VLA und GGVS/ADR, abgenommen für alle Klassen einschließlich Gifte.

Vorteilhafterweise ist das Lastfahrzeug mit einer Einrichtung zur Erzeugung von Unterdruck- und Überdruck versehen, die entweder im Innenraum des Ladungsbehälters angeordnet ist oder mit diesem über geeignete Rohr- oder Schlauchleitungen verbunden ist, um im Innenraum des Ladungsbehälters einen entsprechenden Unterdruck oder Überdruck herzustellen. Die Verbindung zwischen der Druckerzeugungseinrichtung und dem Innenraum ist dabei durch Filtereinrichtungen so gesichert, daß ein Eindringen von Ladungsgut in die Einrichtung vermieden wird. Mit der Erzeugung eines geeigneten Unterdrucks im Innenraum des Ladungsbehälters ist es möglich, Ladungsgut über die Anschlußstutzen und den Ein- und Auslaß in den Innenraum des Ladungsbehälters einzusaugen, so daß keine gesonderten Beladungseinrichtungen notwendig sind. Natürlich kann alternativ auch eine Beladung über die am Ladungsbehälter obenseitig angeordneten sog. Mannlöcher, die über entsprechende Verschlußeinrichtungen geschlossen sind, erfolgen. Durch Erzeugung eines entsprechenden Überdrucks im Innenraum des Ladungsbehälters kann dann nach Öffnen der Absperreinrichtungen eine Entladung des Ladungsbehälters über den Aus- und Einlaß erfolgen.

Da hier alle Ladegüter in Frage kommen, die druckbeaufschlagbar sind, können mit einem solchen Silobehälter Flüssigkeiten, Gase, Feststoffe wie Granulate, Schlämme, zähflüssige Stoffe u.dgl. in gleicher Weise, auch gemischt, günstig und gefahrlos transportiert werden.

Vorteilhafterweise ist vorgesehen, daß die Einrichtung zur Erzeugung von Unterdruck und Überdruck als mit einer Antriebseinrichtung verbundener Kompressor und Evakuierer ausgebildet ist, wobei die Antriebseinrichtung als Elektromotor, Verbrennungsmotor, Hydraulik- oder Pneumatikantrieb od.dgl. ausgebildet ist. Der Kernpunkt ist dabei, daß es sich um eine selbsttätig betreibbare Einrichtung handelt, die unabhängig arbeitet, so daß eine Entleerung des Sattelaufliegers auch bei abgekoppeltem Sattelfahrzeug möglich ist. Die Einrichtung kann dabei noch mit einem zusätzlichen Energiespeicher, wie Akkumulator oder Druckspeicher verbunden sein, der durch entsprechende Einrichtungen während der Fahrt des Sattelfahrzeugs aufladbar ist, so daß es möglich ist, am Zielort das Sattelfahrzeug abzustellen und vom Zugfahrzeug abzukoppeln, so daß dann dort eine selbsttätige und möglichst automatische Be- und Entladung durchführbar ist.

Um dieses Ziel zu erreichen, ist vorteilhafterweise auch noch vorgesehen, daß der Behälterinnenraum mit Sprühdüsen versehen ist, die mit einer Reinigungseinheit verbunden sind, wobei die Sprühdüsen zumindest teilweise an pendelnden und/oder rotierenden Trägerarmen angeordnet sind, um eine restlose Reinigung des Behälterinnenraumes zu ermöglichen.

Die Reinigungseinheit weist dabei eine Druckpumpe für eine Reinigungsflüssigkeit und/oder ein Reinigungsgas auf, das einem entsprechenden Vorratsbehälter entnommen wird, wobei es zur Reinigung von staubförmigen Ladungsresten oftmals ausreichend ist, wenn Luft als Reinigungsmedium verwendet wird, während es bei anderen, insbesondere haftenden und klebrigen Ladungsgütern notwendig ist, daß spezielle Reinigungsflüssigkeiten verwendet werden. Insbesondere beim Produktwechsel sind hier hohe Reinheitsanforderungen gesetzt, die mit der neuen Ausbildung des Sattelaufliegers erfüllbar sind, da zunächst schon eine äußerst weitgehendne Entleerung durch das Drucksystem möglich ist, wobei das Drucksystem vorteilhafterweise noch mit an sich bekannten Drucklufteinlaßrückschlagventilen verbunden wird, die an oder in der Auslaßtrichterwand des Silobehälters angeordnet werden und die für einen vollständigen Austrag des Ladungsgutes sorgen.

Ein Ausführungsbeispiel der Erfindung wird nachstehend anhand der Zeichnung näher erläutert. Es zeigen
- **Fig. 1**: eine Seitenansicht eines erfindungsgemäßen Sattelaufliegers, und
- **Fig. 2**: in einer Ansicht von hinten den Sattelauflieger gemäß Figur 1.

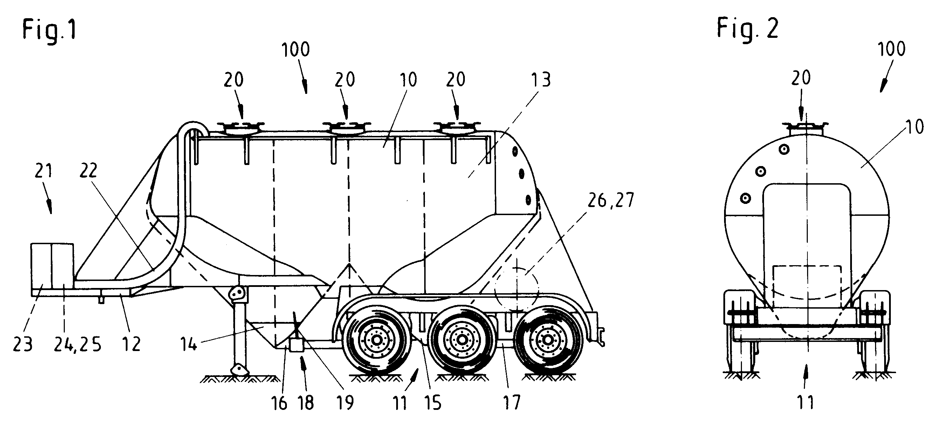

Der konstruktive Aufbau von Anhängern, insbesondere Sattelaufliegern, oder auch mit einem Antrieb ausgestatteten Lastfahrzeugen ist dem Grundsatz nach nach dem Stand der Technik bekannt. Der in Figur 1 dargestellte dreiachsige Sattelauflieger 100 ist selbsttragend ausgebildet, wobei der Ladungsbehälter 10 auf einem dreiachsigen Achsaggregat als Fahrwerk 11 auflagert und mit einem üblichen Sattelanschluß 12 zum Aufsatteln auf eine nicht dargestellte Sattelkupplung versehen ist. Der Ladungsbehälter 10, der aus geometrischen Grundformen wie Zylinder, Kegel, Kugel, Böden od.dgl. und deren Abwicklungen und Durchdringungen aus V2A besteht und einen durch entsprechende Wandteile umschlossenen Behälterinnenraum 13 aufweist, ist untenseitig mit zwei konusförmigen Ein- und Auslässen 14,15 versehen, von denen jeder in einen Rohrstutzen 16,17 ausläuft, wobei jeder Rohrstutzen 16,17 mit einer Absperreinrichtung 18 versehen ist, die beispielsweise als manueller Schieber 19 ausgebildet sein kann. Um eine Prüfung des Behälters, aber auch unter besonderen Gegebenheiten eine Beladung des Behälters zu ermöglichen, ist dieser mit üblichen Mannlöchern 20 versehen.

Im Bereich des Sattelanschlusses 12 ist die Einrichtung zur Erzeugung von Unterdruck und Überdruck 21 angeordnet, die über eine Schlauch- oder Rohrleitung 22 mit dem Behälterinnenraum verbunden ist. Die Einrichtung 21 besteht dabei aus einem Antrieb 23, einem Kompressor 24 und einem Evakuierer 25, wobei als Antrieb 23 bevorzugterweise ein Verbrennungsmotor vorgesehen ist, jedoch kann auch jeder andere Antrieb Einsatz finden, der es gewährleistet, eine selbsttätige Be- und Entladung des Ladungsbehälters 10 durchzuführen.

In der Zeichnung nur angedeutet ist eine Reinigungseinheit 26 mit einem Reinigungsbehälter 27, die mit entsprechenden, in der Zeichnung nicht dargestellten Sprühdüsen verbunden ist, mit denen die Reinigung des Innenraums 13 des Ladungsbehälters 10 durchgeführt wird.

| Bezugszeichenliste: | |
|---|---|
| Sattelauflieger | 100 |
| Ladungsbehälter | 10 |
| Fahrwerk | 11 |
| Sattenanschluß | 12 |
| Behälterinnenraum | 13 |
| Ein- und Auslässe | 14,15 |
| Rohrstutzen | 16,17 |
| Absperreinrichtung | 18 |
| Schieber | 19 |
| Mannlöcher | 20 |
| Einrichtung | 21 |
| Schlauch- oder Rohrleitung | 22 |
| Antrieb | 23 |
| Kompressor | 24 |
| Evakuierer | 25 |
| Reinigungseinheit | 26 |
| Reinigungsbehälter | 27 |

## Patentansprüche

1. Lastfahrzeug, nämlich Sattelauflieger (100), mit mindestens einem auf einem Fahrwerk (11) auflagernden Ladungsbehälter (10) zur Aufnahme druckbeaufschlagbarer Güter, der mindestens einen unteren Auslaß (14) aufweist, wobei der untere Auslaß des Ladungsbehälters (10) als Ein- und Auslaß (14,15) gestaltet ist und mit Zu- und Ableitungsanschlüssen (16,17) und mit Absperreinrichtungen (18) versehen ist und das Lastfahrzeug eine Einrichtung (21) zur Erzeugung von Unterdruck und Überdruck aufweist, die mit dem Innenraum (13) des Ladungsbehälters (10) verbunden als mit einer Antriebseinrichtung (23) verbundener Kompressor (24) und Evakuierer (25) ausgebildet ist, wobei die Antriebseinrichtung (23) als Elektromotor, Verbrennungsmotor, Hydraulik- oder Pneumatikantrieb od.dgl. ausgebildet ist und der untere Ein- und Auslaß (14,15) nach Art der an sich bekannten Entladungseuter konus-, euter- oder trichterförmig ausgebildet ist,
dadurch gekennzeichnet,
daß der Ladungsbehälter (10) zwei Ein- und Auslässe (14,15) aufweist und selbsttragend ausgebildet ist, und daß der Innenraum (13) des Ladungsbehälters (10) mit Sprühdüsen versehen ist, die mit einer Reinigungseinheit (26) verbunden sind, wobei die Sprühdüsen zumindest teilweise an pendelnd und/oder rotierend bewegbaren Trägerarmen angeordnet sind und die Reinigungseinheit (26) eine Druckpumpe für eine Reinigungsflüssigkeit und/oder ein Reinigungsgas aufweist und mit einem Vorratsbehälter (27) für ein Reinigungsmedium verbunden ist.

2. Lastfahrzeug nach Anspruch 1,
dadurch gekennzeichnet,
daß das Lastfahrzeug feste, flüssige Güter und Mischungen von diesen in neutraler oder Gefahrgutform von unten saugend aufnehmen kann und ohne Kippen und ohne Schubkolben durch Druck wieder entleert werden kann.

## Claims

1. Load-carrying vehicle, more particularly a semitrailer (100) with at least one load container (10) supported on a chassis (11) for the accommodation of pressurizable materials, which possesses at least one lower outlet (14), in which case the lower outlet of the load container (10) is constructed in the form of an inlet and an outlet (14,15) and is provided with supply and discharge connections (16, 17) and with shutoff means (18) and the load-carrying vehicle possesses an apparatus (21) for the generation of negative pressure and positive pressure, which, while communicating with the interior (13) of the load container (10), is constructed in the form of a compressor (24) and evacuating means (25) connected to a driving means (23), the driving means being constructed in the form of an electromotor, internal combustion engine, hydraulic or pneumatic drive or suchlike and the lower inlet and outlet (14,15) is constructed along the lines of the so-called discharge udders known per se possessing the configuration of a cone, udder or funnel,
characterized in that
the load container (10) possesses two inlets and outlets (14,15) and is constructed in a self-supporting manner and in that the interior (13) of the load container (10) is provided with spraying nozzles which are connected with a cleansing unit (26), the spraying nozzles being at least partly supported on supporting arms that are movable in a pendulum-like fashion and/or rotatably and in that the cleansing unit (26) possesses a pressure pump for a cleansing liquid and/or a cleansing gas and communicates with a supply tank (27) for cleansing medium.

2. Load-carrying vehicle according to Claim 1,
characterized in that
the load-carrying vehicle is acapable of accommodating solid and liquid materials and mixtures of the same in a neutral form or in the form of hazardous materials drawn in by suction from below and can be emptied again without tipping and without thrust piston by means of pressure.

## Revendications

1. Véhicule de transport de charges, notamment semi-remorque (100), avec au moins un conteneur de charges (10) reposant sur un dispositif de roulement (11) pour recevoir des marchandises pouvant être pressurisées, qui présente au moins une évacuation inférieure (14), l'évacuation inférieure du conteneur de charges (10) étant configurée comme entrée et sortie (14, 15) et étant pourvue de raccords d'amenée et d'évacuation (16, 17) et de dispositifs d'arrêt (18) et le véhicule de transport de charges présentant un dispositif (21) pour produire dépression et surpression qui est relié à l'espace intérieur (13) du conteneur de charges (10) et qui est configuré comme un compresseur (24) et dispositif à faire le vide (25), relié à un dispositif d'entraînement (23), le dispositif d'entraînement (23) étant configuré comme un moteur électrique, un moteur à combustion interne, un entraînement hydraulique ou pneumatique ou équivalent et l'entrée et la sortie inférieure (14, 15) étant configurée en forme de cône, de pis ou d'entonnoir à la manière du pis de décharge connu en soi,
caractérisé en ce
que le conteneur de charges (10) présente deux entrées et sorties (14, 15) et est configuré autoporteur et que l'espace intérieur (13) du conteneur de charges (10) est pourvu de pulvérisateurs qui sont reliés à une unité de nettoyage (26), les pulvérisateurs étant placés tout au moins partiellement sur des bras porteurs mobiles en oscillant et/ou en rotation et l'unité de nettoyage (26) présentant une pompe de refoulement pour un liquide de nettoyage et/ou un gaz de nettoyage et étant reliée à un réservoir (27) pour une substance de nettoyage.

2. Véhicule de transport de charges selon la revendication 1,
caractérisé en ce
que le véhicule de transport de charges peut recevoir en les aspirant par le bas des marchandises solides, liquides et des mélanges de celles-ci sous forme neutre ou sous forme de marchandises dangereuses et peut être vidé à nouveau par pression sans basculement et sans piston de poussée.
